# EUROPEAN PATENT APPLICATION

(11) **EP 2 099 247 A1**
(43) Date of publication of application: **09.09.2009**
(21) Application number: 09153551.8
(22) Date of filing: 24.02.2009
(51) Int. Cl.: H04W 64/00

(54) **System and method for locating a dual-mode calling instrument in a plurality of networks**

(30) Priority: 05.03.2008 US 42635
(71) Applicant: West Corporation, Omaha NE 68154 (US)
(72) Inventor: Hwang, Kuen-Yih, Naperville, IL Illinois IL 60540 (US)
(74) Representative: Rutz & Partner

(57) **Abstract**

A system for locating a dual-mode telecommunication calling instrument communicating in or among a plurality of networks using two communication protocols, each respective network of the plurality of networks including at least one respective communication access unit coupled with a respective controller unit and a respective switching unit for routing communication to a called unit, includes: a data base coupled with each respective controller unit and with each respective switching unit. The data base cooperates with each respective controller unit to store location information substantially when the calling instrument begins communicating in the respective network coupled with the respective controller unit. The respective switching unit in the respective network coupled with the respective controller unit employs the location information to effect the locating.

## Description

### FIELD OF THE INVENTION

The present invention is directed to telecommunication systems, and especially to locating calling units operating within or among a plurality of telecommunication networks using a plurality of communication protocols.

### BACKGROUND OF THE INVENTION

Wireless phone calls, including wireless emergency E9-1-1 calls, may be placed using several different network s employing several different communication protocols. Phone instrument manufacturers are producing calling instruments having capabilities for communicating using more than one protocol. By way of example and not by way of limitation, some calling units or instruments are configured for dual-mode operation in an Unlicensed Mobile Access (UMA) Network (UMAN) or Global Area Network (GAN) and also in a Radio Access Network (RAN). A UMAN/GAN-capable calling instrument may be able to effect communications, by way of example and not by way of limitation, in a Wi-Fi network, a Bluetooth network or another unlicensed wireless network. A RAN-capable calling instrument may be able to effect communications in a cellular radio access network such as, by way of example and not by way of limitation, a cellular GSM (Group Speciale Mobile; or Global System for Mobile communications) network.

It may be useful for some called parties to be able to determine location of a calling party during a call. One such situation, by way of example and not by way of limitation, is when a caller places an emergency E9-1-1 call. Known location information is preferably used to route E9-1-1 calls to an appropriate Public Safety Answering Point (PSAP; sometimes referred to as a Public Safety Answering Position) near the origin of the call. The same information may be used by the PSAP to support the emergency response to the call, such as dispatching fire, police or emergency medical personnel and equipment and for call back to the call originator if necessary. However, origin of a special number call is often not known when the call is placed using a mobile phone.

If location information relating to a mobile phone provides only coarse mobile network cell-level granularity to an E9-1-1 PSAP, police or emergency service personnel may go to a location indicated for a particular phone number and find that they have arrived at a large office building or at a widespread college campus with no means available for locating the caller with greater accuracy. Valuable time may be spent in finding the particular locus of the caller to render the required assistance. Such delays can be life threatening in the case of emergency service calls.

Mobile Location Centers (MLCs) may include, by way of example and not by way of limitation, a Service Mobile Location Center (SMLC) operating with a particular network controller entity (e.g., a Base Station Controller (BSC) in a cellular telephone network) or may include a Gateway Mobile Location Center (GMLC) associated with a GSM network. Location information provided by presently configured MLCs will not provide information relating to another network than the network in which the particular MLC is coupled.

If a calling instrument operates among a plurality of networks, and especially if the varied networks employ different communication protocols, a called party such as a PSAP may experience difficulty in obtaining up-to-date location information relating to the called instrument.

There is a need for a system and method for locating a caller placing a call handled in or among a plurality of networks using more than one communication protocol.

### SUMMARY OF THE INVENTION

A system for locating a dual-mode telecommunication calling instrument communicating in or among a plurality of networks using two communication protocols, each respective network of the plurality of networks including at least one respective communication access unit coupled with a respective controller unit and a respective switching unit for routing communication to a called unit, includes: a data base coupled with each respective controller unit and with each respective switching unit. The data base cooperates with each respective controller unit to store location information substantially when the calling instrument begins communicating in the respective network coupled with the respective controller unit. The respective switching unit in the respective network coupled with the respective controller unit employs the location information to effect the locating.

A method for locating a dual-mode telecommunication calling instrument communicating in or among a plurality of networks using two communication protocols, each respective network of the plurality of networks including at least one respective communication access unit coupled with a respective controller unit and a respective switching unit for routing communication to a called unit, includes: (a) providing a data base coupled with each respective controller unit and with each respective switching unit; (b) operating the data base to cooperate with each respective controller unit to store location information substantially when the calling instrument begins communicating in the respective network coupled with the respective controller unit; and (c) operating the respective switching unit in the respective network coupled with the respective controller unit employing the location information to effect the locating.

It is therefore a feature of the present invention to provide a system and method for locating a caller placing a call handled in or among a plurality of networks using more than one communication protocol.

Further features of the present invention will be apparent from the following specification and claims when considered in connection with the accompanying drawings, in which like elements are labeled using like reference numerals in the various figures, illustrating the preferred embodiments of the invention.

### BRIEF DESCRIPTION OF THE DRAWINGS

FIG. 1 is a schematic diagram illustrating a system configured according to the teaching of the present invention deployed in a representative two-network arrangement.
FIG. 2 is a schematic diagram illustrating call routing for a system configured according to the teaching of the present invention deployed in a representative multi-network arrangement.
FIG. 3 is a flow diagram illustrating a method for locating a dual-mode telecommunication calling instrument communicating in or among a plurality of networks.

### DETAILED DESCRIPTION

For purposes of illustration, by way of example and not by way of limitation, the present invention will be discussed in the context of an emergency service network in the United States, commonly referred to as an E9-1-1 network. The teachings of the present invention are equally applicable, useful and novel in other calling systems including other special number calling systems, such as maintenance service networks, college campus security networks and other networks.

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

When the terms "coupled" and "connected", along with their derivatives, are used herein, it should be understood that these terms are not intended as synonyms for each other. Rather, in particular embodiments, "connected" is used to indicate that two or more elements are in direct physical or electrical contact with each other. "Coupled" is used to indicated that two or more elements are in either direct or indirect (with other intervening elements between them) physical or electrical contact with each other, or that the two or more elements co-operate or interact with each other (e.g., as in a cause-and-effect relationship).

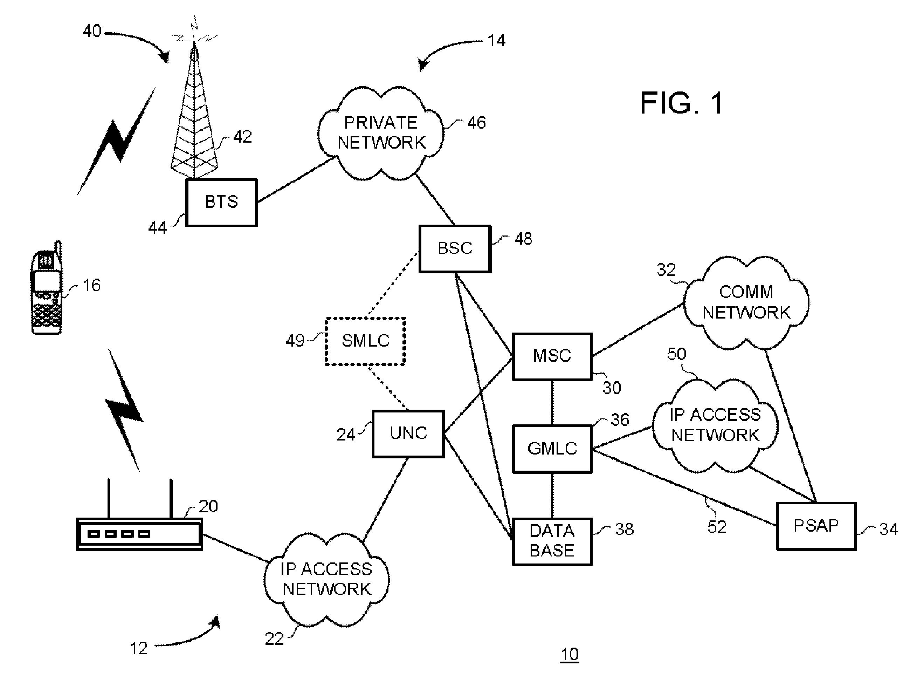

FIG. 1 is a schematic diagram illustrating a system configured according to the teaching of the present invention deployed in a representative two-network arrangement. In FIG. 1, a telecommunication system 10 includes an Unlicensed Mobile Access (UMA) Network (UMAN) 12 and a Radio Access Network (RAN) 14. UMAN 12 may be embodied in, by way of example and not by way of limitation, a Wi-Fi network, a Bluetooth network or another type of UMA. RAN 14 may be embodied in, by way of example and not by way of limitation, a cellular network or a Personal Communication System (PCS) network employing any of several communication protocols including, by way of further example and not by way of limitation, Advanced Mobile Phone Service (AMPS), GSM or another protocol using Time Division Multiple Access (TDMA), Code Division Multiple Access (CDMA) or another coding scheme. UMAN 12 and RAN 14 are configured for wireless communication with a wireless calling unit or instrument 16.

UMAN 12 includes an access unit 20 coupled with an Internet Protocol (IP) network 22. Access unit 20 facilitates communication between wireless communicating unit 16 and IP network 22. IP network 22 is coupled with a UMA Network Controller (UNC) 24. UNC 24 is coupled with a Mobile Switching Center (MSC) 30. MSC 30 is coupled with a communication network 32. Communication network 32 is coupled with a PSAP 34. MSC 30 is also coupled with a Gateway Mobile Location Center (GMLC) 36 and a data base 38. UNC 24 is also coupled with data base 38.

PSAP 34 may be connected with GMLC 36 via an IP network 50 to permit communication between PSAP 34 and GMLC 36 without involving Communication network 32. PSAP 34 may be directly coupled with GMLC 36 via a direct connection 52 to permit communication between PSAP 34 and GMLC 36 without traversing an intervening network.

RAN 14 includes an access unit 40 that includes a radio antenna embodied in a radio tower 42 and a Base Transceiver Station (BTS) 44 coupled with radio tower 42. BTS 44 is coupled with a private network 46. Private network 46 may be embodied in, by way of example and not by way of limitation, a cellular network or a PCS network employing any of several communication protocols including, by way of further example and not by way of limitation, Advanced Mobile Phone Service (AMPS), GSM or another protocol using Time Division Multiple Access (TDMA), Code Division Multiple Access (CDMA) or another coding scheme. Access unit 40 facilitates communication between wireless communicating unit 16 and private network 46. Private network 46 is coupled with a Base Station Controller (BSC) 48. BSC 48 is coupled with MSC 30. A Serving Mobile Location Center (SMLC) 49 may be coupled with one or both of UNC 24 and BSC 48. The alternate nature of providing and coupling SMLC 49 is indicated by presenting SMLC 49 and its couplings in dotted line format.

Calling unit 16 may wirelessly access UMAN 12 to place an emergency E9-1-1 call via access unit 20 to establish communication with PSAP 34 via IP network 22, UNC 24, MSC 30 and communication network 32. When placing the call with MSC 30, UNC 24 will also cooperate with data base 38 to enter and store location data relating to calling unit 16 in data base 38. In a preferred embodiment, location information will indicate identity and location of calling unit 16. Location preferably is indicated in latitude/longitude, Global Positioning System (GPS) or another system giving an XY location indication for calling unit 16. Identity of calling unit 16 is preferably indicated using a mobile station identifier such as, by way of example and not by way of limitation, an MSISDN (Mobile Station Integrated Services Digital Network) number. When calling unit 16 ceases communicating in UMAN 12 such as, by way of example and not by way of limitation, shutting off or roaming to another network than UMAN 12, UNC 24 will cooperate with data base 38 to remove location data relating to calling unit 16 from data base 38.

If calling instrument or unit 16 roams so as to establish communications with another access point (not shown in FIG. 1), after calling instrument or unit 16 successfully connects with a new access point new location information relating to calling instrument or unit 16 will be sent to database 38.

When communication is established between calling unit 16 and PSAP 34, PSAP 34 may inquire of GMLC 36 via MSC 30 as to location of calling unit 16. GMLC 36 will inquire of data base 38 regarding location of calling unit 16. Location information regarding calling unit 16 is stored in data base 38 because calling unit 16 is communicating within UMAN 12, and the stored location information is provided to PSAP 34. PSAP 34 may use the stored location information to timely and efficiently provide emergency services to a caller using calling instrument or unit 16. In addition or in the alternative, data base 38 may store location information relating to locus of access unit 20. Location information relating to locus of access unit 20 may be expressed in, by way of example and not by way of limitation, latitude/longitude, another X/Y locating scheme, an access point identification such as MAC (Media Access Control) address, street address or another locator, or a combination of such locators. In a situation in which calling instrument or unit 16 cannot provide information relating to its own location, such additional or alternate locating information may be employed to approximate a location for calling instrument or unit 16.

Calling unit 16 may instead wirelessly access RAN 14 to place an emergency E9-1-1 call via access unit 40 to establish communication with PSAP 34 via private network 46, BSC 48, MSC 30 and communication network 32. When placing the call with MSC 30, BSC 48 will also cooperate with data base 38 to enter and store location data relating to calling unit 16 in data base 38. In a preferred embodiment, location information will indicate identity and location of calling unit 16. Location preferably is indicated in latitude/longitude, Global Positioning System (GPS) or another system giving an XY location indication for calling unit 16. Identity of calling unit 16 is preferably indicated using a mobile station identifier such as, by way of example and not by way of limitation, an MSISDN (Mobile Station Integrated Services Digital Network) number. When calling unit 16 ceases communicating in RAN 14 such as, by way of example and not by way of limitation, shutting off or roaming to another network than RAN 14, BSC 48 will cooperate with data base 38 to remove location data relating to calling unit 16 from data base 38. If calling instrument or unit 16 roams so as to establish communications with another access unit (not shown in FIG. 1), after calling instrument or unit 16 successfully connects with a new access unit new location information relating to calling instrument or unit 16 will be sent to database 38.

When communication is established between calling unit 16 and PSAP 34, PSAP 34 may inquire of GMLC 36 via MSC 30 as to location of calling unit 16. GMLC 36 will inquire of data base 38 regarding location of calling unit 16. Location information regarding calling unit 16 is stored in data base 38 because calling unit 16 is communicating within RAN 14, and the stored location information is provided to PSAP 34. PSAP 34 may use the stored location information to timely and efficiently provide emergency services to a caller using calling instrument or unit 16. In addition or in the alternative, data base 38 may store location information relating to locus of access unit 40. Location information relating to locus of access unit 40 may be expressed in, by way of example and not by way of limitation, latitude/longitude, another X/Y locating scheme, cell identification, cell-and-sector identification, street address or another locator, or a combination of such locators. In a situation in which calling instrument or unit 16 cannot provide information relating to its own location, such additional or alternate locating information may be employed to approximate a location for calling instrument or unit 16.

If GMLC 36 cannot find location information relating to communication instrument or unit 16 in database 38, GMLC 36 may employ traditional methods to ascertain a location for calling instrument or unit 16. By way of example and not by way of limitation, GMLC 36 may use a calling unit ID (such as MSISDN; Mobile Station ISDN number) or another identifier to query an HLR (Home Location Register) to obtain location information relating to MSC 30. GMLC 36 may then query MSC 30 to obtain location information relating to calling unit 16. No HLR is illustrated in FIG. 1; HLRs are understood by those skilled in the art of mobile telecommunication systems design.

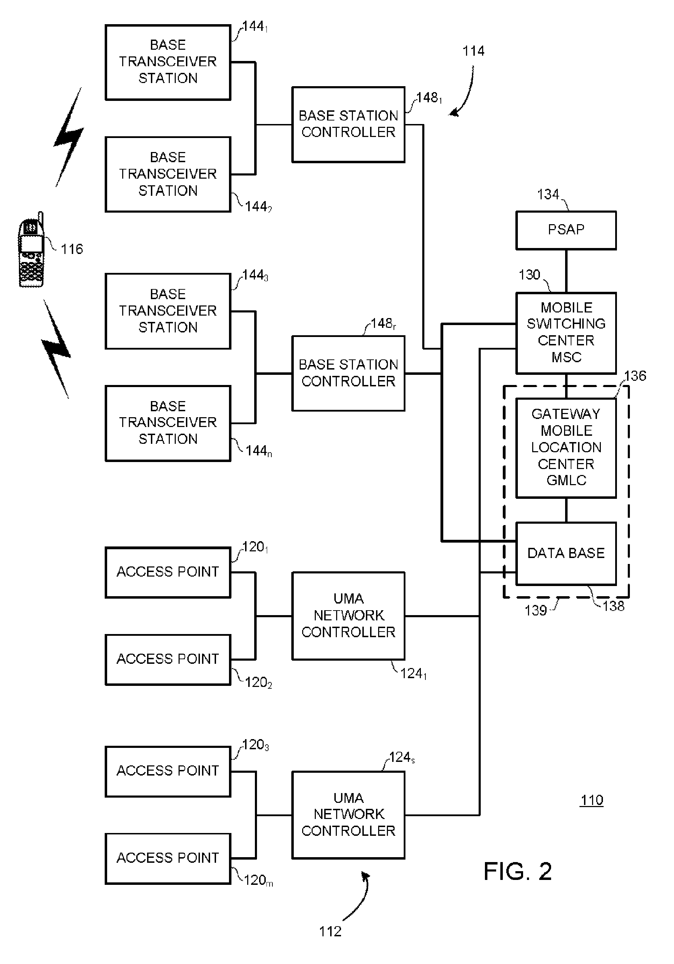

FIG. 2 is a schematic diagram illustrating call routing for a system configured according to the teaching of the present invention deployed in a representative multi-network arrangement. In FIG. 2, a telecommunication system 110 includes an Unlicensed Mobile Access (UMA) Network (UMAN) 112 and a Radio Access Network (RAN) 114. UMAN 112 may include, by way of example and not by way of limitation, a Wi-Fi network, a Bluetooth network or another type of UMA. RAN 114 may include, by way of example and not by way of limitation, a cellular network or a Personal Communication System (PCS) network employing any of several communication protocols including, by way of further example and not by way of limitation, Advanced Mobile Phone Service (AMPS), GSM or another protocol using Time Division Multiple Access (TDMA), Code Division Multiple Access (CDMA) or another coding scheme. UMAN 112 and RAN 114 are configured for wireless communication with a wireless calling unit or instrument 116.

UMAN 112 includes access units 1201, 1202, 1203, 120m coupled for call routing via an Internet Protocol (IP) network (not shown in FIG. 2; see IP network 22, FIG. 1). The indicator "m" is employed to signify that there can be any number of access units in telecommunication system 110. The inclusion of four access units 1201, 1202, 1203, 120m in FIG. 2 is illustrative only and does not constitute any limitation regarding the number of access units that may be included in a telecommunication system employing the present invention.

Access units 1201, 1202, 1203, 120m facilitate communication with a wireless communicating unit 116. Calls from access units 1201, 1202 may be placed with a UMA Network Controller (UNC) 1241. Calls from access units 1203, 120m may be placed with a UMA Network Controller (UNC) 124s. The indicator "s" is employed to signify that there can be any number of UNCs in telecommunication system 110. The inclusion of two UNCs 1241, 124s in FIG. 2 is illustrative only and does not constitute any limitation regarding the number of UNCs that may be included in a telecommunication system employing the present invention. UNCs 1241, 124s are coupled with a Mobile Switching Center (MSC) 130. MSC 130 is coupled for call routing with a receiving or called party such as, by way of example and not by way of limitation, PSAP 134 via a communication network (not shown in FIG. 2; see communication network 30, FIG. 1). MSC 130 is also coupled with a Gateway Mobile Location Center (GMLC) 136 and a data base 138. UNCs 1241, 124s are also coupled with data base 138.

RAN 114 includes access units represented in FIG.2 by Base Transceiver Stations (BTS) 1441, 1442, 1443, 144n. The indicator "n" is employed to signify that there can be any number of BTSs in telecommunication system 110. The inclusion of four BTSs 1441, 1442, 1443, 144n in FIG. 2 is illustrative only and does not constitute any limitation regarding the number of BTSs that may be included in a telecommunication system employing the present invention.

BTSs 1441, 1442, 1443, 144n are coupled for call routing with MCS 130 via a private network (not shown in FIG. 2; see private network 46, FIG. 1). BTSs 1441, 1442, 1443, 144n facilitate communication with wireless communicating unit 116. BTSs 1441, 1442, 1443, 144n are coupled with a Base Station Controllers (BSC) 1481, 148r. The indicator "r" is employed to signify that there can be any number of BSCs in telecommunication system 110. The inclusion of two BSCs 1481, 148r in FIG. 2 is illustrative only and does not constitute any limitation regarding the number of BSCs that may be included in a telecommunication system employing the present invention. BSCs 1481, 148r are coupled with MSC 130 and with data base 138. GMLC 136 and data base 138 may be embodied in an integrally configured unit 139 if desired.

Calling unit 116 may wirelessly access UMAN 112 to place an emergency E9-1-1 call via an access unit 1201, 1202, 1203, 120m to establish communication with PSAP 134 via a UNC 1241, 124s and MSC 130. When placing the call with MSC 130, a UNC 1241, 124s will also cooperate with data base 138 to enter and store location data relating to calling unit 116 in data base 138. In a preferred embodiment, location information will indicate identity and location of calling unit 116. Location preferably is indicated in latitude/longitude, Global Positioning System (GPS) or another system giving an XY location indication for calling unit 116. Identity of calling unit 116 is preferably indicated using a mobile station identifier such as, by way of example and not by way of limitation, an MSISDN (Mobile Station Integrated Services Digital Network) number. When calling unit 116 ceases communicating in UMAN 112, a UNC 1241, 124s involved in the call routing will cooperate with data base 138 to remove location data relating to calling unit 116 from data base 138.

Calling unit 116 ceasing communicating may be effected by calling unit 116 ceasing transmissions and or otherwise ending the extant call. Calling unit 116 ceasing communicating may also be effected by calling unit 116 roaming within UMAN 112 to effect changing connection from one access point 1201, 1202, 1203, 120m to another access point 1201, 1202, 1203, 120m. Another way that calling unit 116 may cease communicating may be effected by calling unit 116 roaming from UMAN 112 to RAN 114 to establish communication with MSC 130 via a BTS 1441, 1442, 1443, 144n.

If calling instrument or unit 116 roams so as to establish communications with another access point 120m, after calling instrument or unit 116 successfully connects with a new access point 120m new location information relating to calling instrument or unit 116 will be sent to database 138.

When communication is established between calling unit 116 and PSAP 134, PSAP 134 may inquire of GMLC 136 via MSC 130 as to location of calling unit 116. GMLC 136 will inquire of data base 138 regarding location of calling unit 116. Location information regarding calling unit 116 is stored in data base 138 because calling unit 116 is communicating within UMAN 112, and the stored location information is provided to PSAP 134. PSAP 134 may use the stored location information to timely and efficiently provide emergency services to a caller using calling instrument or unit 116. In addition or in the alternative, data base 138 may store location information relating to locus of an access unit 120m. Location information relating to locus of an access unit 120m may be expressed in, by way of example and not by way of limitation, latitude/longitude, another X/Y locating scheme, an access point identification such as MAC (Media Access Control) address, street address or another locator, or a combination of such locators. In a situation in which calling instrument or unit 116 cannot provide information relating to its own location, such additional or alternate locating information may be employed to approximate a location for calling instrument or unit 116.

Calling unit 116 may instead wirelessly access RAN 114 to place an emergency E9-1-1 call via a BTS 1441, 1442, 1443, 144n to establish communication with PSAP 134 via a BSC 1481, 148r and MSC 130. When placing the call with MSC 130, a BSC 1481, 148r will also cooperate with data base 138 to enter and store location data relating to calling unit 116 in data base 138. In a preferred embodiment, location information will indicate identity and location of calling unit 116. Location preferably is indicated in latitude/longitude, Global Positioning System (GPS) or another system giving an XY location indication for calling unit 116. Identity of calling unit 116 is preferably indicated using a mobile station identifier such as, by way of example and not by way of limitation, an MSISDN (Mobile Station Integrated Services Digital Network) number. When calling unit 116 ceases communicating in RAN 114 such as, by way of example and not by way of limitation, shutting off or roaming to another network than RAN 114, a BSC 1481, 148r involved in the extant call will cooperate with data base 138 to remove location data relating to calling unit 116 from data base 138.

Calling unit 116 ceasing communicating may be effected by calling unit 116 ceasing transmissions and or otherwise ending the extant call. Calling unit 116 ceasing communicating may also be effected by calling unit 116 roaming within RAN 114 to effect changing connection from one BTS 1441, 1442, 1443, 144n to another BTS 1441, 1442, 1443, 144n. Another way that calling unit 116 may cease communicating may be effected by calling unit 116 roaming from RAN 114 to UMAN 112 to establish communication with MSC 130 via an access point 1201, 1202, 1203, 120m.

If calling instrument or unit 116 roams so as to establish communications with another BTS 144n, after calling instrument or unit 116 successfully connects with a new BTS 144n new location information relating to calling instrument or unit 116 will be sent to database 138.

When communication is established between calling unit 116 and PSAP 134, PSAP 134 may inquire of GMLC 136 via MSC 130 as to location of calling unit 116. GMLC 136 will inquire of data base 138 regarding location of calling unit 116. Location information regarding calling unit 116 is stored in data base 138 because calling unit 116 is communication within RAN 114, and the stored location information is provided to PSAP 134. PSAP 134 may use the stored location information to timely and efficiently provide emergency services to a caller using calling instrument or unit 116. In addition or in the alternative, data base 138 may store location information relating to locus of a BTS 144n. Location information relating to locus of a BTS 144n may be expressed in, by way of example and not by way of limitation, latitude/longitude, another X/Y locating scheme, cell identification, cell-and-sector identification, street address or another locator, or a combination of such locators. In a situation in which calling instrument or unit 116 cannot provide information relating to its own location, such additional or alternate locating information may be employed to approximate a location for calling instrument or unit 116.

If GMLC 136 cannot find location information relating to communication instrument or unit 116 in database 138, GMLC 136 may employ traditional methods to ascertain a location for calling instrument or unit 116. By way of example and not by way of limitation, GMLC 136 may use a calling unit ID (such as MSISDN; Mobile Station ISDN number) or another identifier to query an HLR (Home Location Register) to obtain location information relating to MSC 130. GMLC 136 may then query MSC 130 to obtain location information relating to calling unit 116. No HLR is illustrated in FIG. 2; HLRs are understood by those skilled in the art of mobile telecommunication systems design.

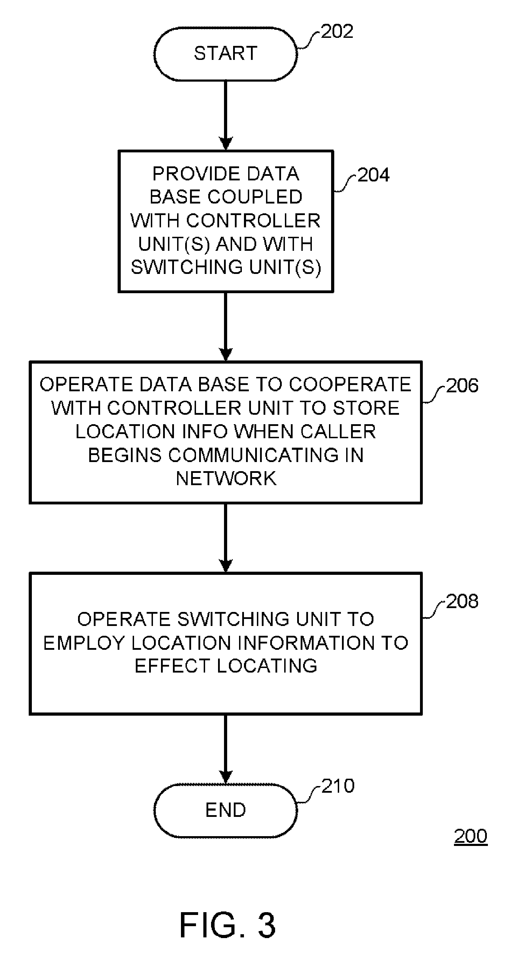

FIG. 3 is a flow diagram illustrating a method for locating a dual-mode telecommunication calling instrument communicating in or among a plurality of networks. In FIG. 3, method 200 for locating a dual-mode telecommunication calling instrument communicating in or among a plurality of networks using two communication protocols begins at a START locus 202. Each respective network of the plurality of networks includes at least one respective communication access unit coupled with a respective controller unit and a respective switching unit for routing communication to a called unit.

Method 200 continues with providing a data base coupled with each respective controller unit and with each respective switching unit, as indicated by a block 204.

Method 200 continues with operating the data base to cooperate with each respective controller unit to store location information substantially when the calling instrument begins communicating in the respective network coupled with the respective controller unit, as indicated by a block 206.

Method 200 continues with operating the respective switching unit in the respective network coupled with the respective controller unit employing the location information to effect the locating. Method 200 terminates at an END locus 210.

It is to be understood that, while the detailed drawings and specific examples given describe embodiments of the invention, they are for the purpose of illustration only, that the system and method of the invention are not limited to the precise details and conditions disclosed and that various changes may be made therein without departing from the spirit of the invention which is defined by the following claims.

## Claims

1. A system for providing location information indicating locus of a calling unit roaming within or among a plurality of communication networks; the system comprising:
a) at least one communication access unit for each respective network of said plurality of communication networks; said calling unit effecting communications via a respective communication access unit of said at least one communication access unit;
b) at least one controller unit coupled with each said respective network and with at least one switching unit; said at least one controller unit and said at least one switching unit cooperating to effect routing of communications to a called unit; and
c) at least one data base coupled with at least one selected controller unit of said at least one controller unit; a respective data base of said at least one data base cooperating with a respective controller unit of said at least one selected controller unit to enter said location information in said respective data base substantially when said calling unit begins communicating in said respective network coupled with said respective controller unit.

2. A system for providing location information indicating locus of a calling unit roaming within or among a plurality of communication networks as recited in Claim 1 wherein said respective data base cooperates with said respective controller unit to remove said location information from said respective data base substantially when said calling unit ceases communicating in said respective network coupled with said respective controller unit.

3. A system for providing location information indicating locus of a calling unit roaming within or among a plurality of communication networks as recited in Claim 1 or 2 wherein said calling instrument is a dual-mode calling unit configured for communicating using two communication protocols.

4. A system for providing location information indicating locus of a calling unit roaming within or among a plurality of communication networks as recited in Claim 3 wherein one communication protocol of said two communication protocols is
a) an unlicensed mobile access protocol or
b) a radio access network protocol.

5. A system for providing location information indicating locus of a calling unit roaming within or among a plurality of communication networks as recited in Claim 3 wherein the first communication protocol of said two communication protocols is an unlicensed mobile access protocol and the second a radio access communication protocol of said two communication protocols is a network protocol.

6. A system for locating a dual-mode telecommunication calling instrument communicating in or among a plurality of networks using two communication protocols; each respective network of said plurality of networks including at least one respective communication access unit coupled with a respective controller unit and a respective switching unit for routing communication to a called unit; the system comprising: a data base coupled with each said respective controller unit and with each said respective switching unit; said data base cooperating with each said respective controller unit to store location information substantially when said calling instrument begins communicating in said respective network coupled with said respective controller unit; said respective switching unit in said respective network coupled with said respective controller unit employing said location information to effect said locating.

7. A system for locating a dual-mode telecommunication calling instrument communicating in or among a plurality of networks using two communication protocols as recited in Claim 6 wherein said data base cooperates with said respective controller unit to remove said location information from said data base substantially when said calling instrument ceases communicating in said respective network coupled with said respective controller unit.

8. A system for locating a dual-mode telecommunication calling instrument communicating in or among a plurality of networks using two communication protocols as recited in Claim 6 or 7 wherein one communication protocol of said two communication protocols is
a) an unlicensed mobile access protocol; or
b) a radio access network protocol.

9. A system for locating a dual-mode telecommunication calling instrument communicating in or among a plurality of networks using two communication protocols as recited in Claim 6 or 7 wherein the first communication protocol of said two communication protocols is an unlicensed mobile access protocol and the second a radio access communication protocol of said two communication protocols is a network protocol.

10. A method for locating a dual-mode telecommunication calling instrument communicating in or among a plurality of networks using two communication protocols; each respective network of said plurality of networks including at least one respective communication access unit coupled with a respective controller unit and a respective switching unit for routing communication to a called unit; the method comprising:
a) providing a data base coupled with each said respective controller unit and with each said respective switching unit;
b) operating said data base to cooperate with each said respective controller unit to store location information substantially when said calling instrument begins communicating in said respective network coupled with said respective controller unit; and
c) operating said respective switching unit in said respective network coupled with said respective controller unit employing said location information to effect said locating.

11. A method for locating a dual-mode telecommunication calling instrument communicating in or among a plurality of networks using two communication protocols as recited in Claim 10 wherein said data base cooperates with said respective controller unit to remove said location information from said data base substantially when said calling instrument ceases communicating in said respective network coupled with said respective controller unit.

12. A method for locating a dual-mode telecommunication calling instrument communicating in or among a plurality of networks using two communication protocols as recited in Claim 10 or 11 wherein one communication protocol of said two communication protocols is
a) an unlicensed mobile access protocol; or
b) a radio access network protocol.

13. A method for locating a dual-mode telecommunication calling instrument communicating in or among a plurality of networks using two communication protocols as recited in Claim 10 or 11 wherein the first communication protocol of said two communication protocols is an unlicensed mobile access protocol and the second a radio access communication protocol of said two communication protocols is a network protocol.
